# EUROPÄISCHE PATENTSCHRIFT

(11) **EP 3 026 796 B1**
(45) Veröffentlichungstag und Bekanntmachung des Hinweises auf die Patenterteilung: **08.09.2021**
(21) Anmeldenummer: 15194427.9
(22) Anmeldetag: 13.11.2015
(51) Int. Cl.: H02K 9/06, H02K 19/36, H02K 19/38, H02K 5/10

(54) **ELEKTRISCHE DREHFELDMASCHINE**
ELECTRIC REVOLVING-FIELD MACHINE
GENERATEUR A INDUCTION ELECTRIQUE

(30) Priorität: 28.11.2014 DE 102014117524
(43) Veröffentlichungstag der Anmeldung: 01.06.2016
(73) Patentinhaber: Deutsches Zentrum für Luft- und Raumfahrt e.V., 51147 Köln (DE)
(72) Erfinder: Veitengruber, Julian, 70199 Stuttgart (DE)
(74) Vertreter: Hoeger, Stellrecht & Partner Patentanwälte mbB

(56) Entgegenhaltungen:
- CN-U- 202 260 862
- DE-A1- 3 320 644
- DE-A1- 10 107 577
- US-A- 5 770 909
- None

## Beschreibung

Die Erfindung betrifft eine elektrische Drehfeldmaschine, umfassend einen Stator, einen Rotor, welcher relativ zu dem Stator rotierbar ist und an welchem eine Fremderregungs-Wicklungseinrichtung angeordnet ist, eine Übertragungseinrichtung zur berührungslosen Übertragung von elektrischer Energie zu der Fremderregungs-Wicklungseinrichtung, mit einer Primärspuleneinrichtung, welche drehfest zu dem Stator angeordnet ist, und mit einer Sekundärspuleneinrichtung, welche drehfest zu dem Rotor angeordnet ist, und eine Lüftereinrichtung zur Luftkühlung der Drehfeldmaschine, wobei die Übertragungseinrichtung an der Lüftereinrichtung angeordnet ist.

Eine rotorseitig fremderregte elektrische Drehfeldmaschine mit einer kontaktlosen Übertragungseinrichtung wird insbesondere dann eingesetzt, wenn aufgrund von Umgebungseinflüssen keine Schleifkontaktverbindung zur rotorseitigen Fremderregung möglich ist und aufgrund von Bauraumrestriktionen oder Gewichtsrestriktionen der Einsatz einer Erregermaschine nicht möglich ist.

Bei einer berührungslosen Übertragungseinrichtung wird elektrische Energie von der Primärspuleneinrichtung zu der Sekundärspuleneinrichtung insbesondere induktiv übertragen, um einen Stromfluss in der Fremderregungs-Wicklungseinrichtung zu bewirken.

In dem Artikel "High Frequency Link Axial Flux Exciter" (http://www.faveluke.com/brushlessalt.html) ist eine rotorseitig fremderregte elektrische Drehfeldmaschine mit Lüftereinrichtung beschrieben.

In der DE 1 763 920 ist ein Selbsterregungs-Wechselstromgenerator-System offenbart.

In der DE 2 122 520 ist ein Wechselstromgenerator mit Drehtransformator offenbart.

In der DE 2 234 472 ist ein Transformator mit relativ zueinander rotierenden koaxialen Eisenkörpern mit darin angeordneten Ringspulen beschrieben.

In der DE 33 20 644 A1 ist eine Synchronmaschine in Form einer Innenpolmaschine offenbart, bei der der Rotor einen Feldmagneten und eine Erregerwicklung für Gleichstrom umfasst.

In der DE 199 35 074 A1 ist ein Drehstromgenerator beschrieben, welcher einen auf einer Welle befestigten Klauenpolläufer mit einer Erregerwicklung umfasst, und einen sich seitlich an den Klauenpolläufer anschließenden Übertrager mit Primär- und Sekundärwicklung umfasst.

In der DE 199 53 583 C1 ist die Verwendung eines Drehstromtransformators zur berührungslosen Übertragung der Schlupfleistung einer Asynchronmaschine von einem Rotor auf einen feststehenden Maschinenteil beschrieben.

In der DE 10 2011 055 137 A1 ist eine Synchronmaschine zum Antrieb eines Fahrzeugs offenbart.

In der US 5,770,909 ist ein Feldkontrollsystem für einen rotorseitig fremderregten Synchronmotor-Generator offenbart.

In der EP 2 297 843 B1 ist eine fremderregte elektrische Synchronmaschine offenbart, bei der am Rotor Spulenwicklungen angeordnet sind und bei der die elektrische Versorgung der Spulenwicklungen mittels eines induktiven Dreh-übertragers erfolgt, dessen Sekundärwicklung mit dem Rotor verbunden ist und dessen induktiv an die Sekundärwicklung gekoppelte Primärwicklung stationär angeordnet ist.

In der DE 10 2005 047 551 A1 ist eine Erregereinrichtung für eine elektrische Maschine offenbart.

In der DE 10 2005 047 451 A1 ist eine Synchronmaschine mit einer Ständerwicklung und einer Polradinduktivität offenbart.

In der EP 0 598 924 B1 ist eine kontaktlose Leistungsübertragungsvorrichtung offenbart.

In der WO 2007/036430 A1 sind ein Verfahren und eine Vorrichtung zur induktiven Energieübertragung an supraleitende Erregerspulen einer elektrischen Maschine beschrieben.

In der US 8,421,570 B2 ist ein rotierender Transformator offenbart.

In der FR 1 041 825 ist eine elektrische Maschine offenbart.

In der WO 2009/112340 A1 ist eine Drehübertragungsanordnung zur berührungslosen Übertragung von Energie und/oder Signalen zwischen relativ zueinander drehbar angeordneten Komponenten offenbart.

Aus der US 2011/0175468 A1 ist eine elektrische Rotationsmaschine bekannt, welche einen Rotor umfasst, der relativ zu einem Stator rotiert, wobei der Rotor ein erstes Laufrad und ein zweites Laufrad rotiert.

Aus der US 2010/0117467 A1 ist eine Anregungsmaschine bekannt, welche eine Hilfsanregungsmaschine und einen Lüfter aufweist.

Aus der CN 201220656211 ist ein bürstenloses Anregungssystem bekannt.

Der Erfindung liegt die Aufgabe zugrunde, eine elektrische Drehfeldmaschine der eingangs genannten Art bereitzustellen, welche kompakt aufgebaut ist.

Diese Aufgabe wird bei der eingangs genannten elektrischen Drehfeldmaschine erfindungsgemäß dadurch gelöst, dass die Lüftereinrichtung eine Lüfterhaube umfasst, an welcher die Primärspuleneinrichtung angeordnet ist, dass die Lüftereinrichtung ein Lüfterrad umfasst, an welchem die Sekundärspuleneinrichtung angeordnet ist, und dass das Lüfterrad eine zentrale Ausnehmung aufweist, in welcher die Sekundärspuleneinrichtung angeordnet ist. Die Erfindung ist eine elektrische Drehfeldmaschine gemäß dem unabhängigen Anspruch 1. Weitere Ausführungsformen der Erfindung sind in den abhängigen Ansprüchen 2 - 15 definiert.

Die Übertragungseinrichtung sorgt für die berührungslose und insbesondere induktive Übertragung von elektrischer Energie an die Fremderregungs-Wicklungseinrichtung des Rotors. Durch die Integration in die Lüftereinrichtung ergibt sich ein einfacher kompakter Aufbau der Drehfeldmaschine als Ganzes.

Es ist dann grundsätzlich möglich, auch eine vorhandene Drehfeldmaschine durch Modifikation der Lüftereinrichtung entsprechend nachzurüsten.

Bei einem konstruktiven einfachen Aufbau lässt sich eine optimierte elektrische Energieübertragung durch die Übertragungseinrichtung erreichen.

Es ist auf einfache Weise möglich, die Übertragungseinrichtung oder Teile davon einem Luftstrom der Lüftereinrichtung auszusetzen, so dass eine Luftkühlung möglich ist.

Die Lüftereinrichtung umfasst eine Lüfterhaube, an welcher die Primärspuleneinrichtung angeordnet ist. Die Lüfterhaube dient dazu, ein Lüfterrad abzudecken, das heißt die Lüfterhaube bildet ein "mechanisches Schutzschild". Die sowieso vorhandene Lüfterhaube lässt sich zur Anordnung der Primärspuleneinrichtung verwenden. Insbesondere lässt sich dadurch ein definierter Luftabstand zwischen der Primärspuleneinrichtung und der Sekundärspuleneinrichtung zur induktiven Energieübertragung einstellen.

Insbesondere sind eine primärseitige elektrische Schaltungseinrichtung und/oder eine sekundärseitige elektrische Schaltungseinrichtung an der Lüftereinrichtung angeordnet. Die primärseitige elektrische Schaltungseinrichtung weist beispielsweise einen DC-AC-Wandler auf. Die sekundärseitige elektrische Schaltungseinrichtung weist beispielsweise einen AC-DC-Wandler auf. Sie kann auch eine weitere elektrische Einrichtung zur Einstellung einer axialen Position des Rotors zu dem Stator aufweisen. Durch die Anordnung an der Lüftereinrichtung ergibt sich ein kompakter Aufbau.

Ganz besonders vorteilhaft ist es, wenn die Primärspuleneinrichtung und/oder eine primärseitige elektrische Schaltungseinrichtung so angeordnet sind, dass sie einem Luftstrom der Lüftereinrichtung mindestens teilweise ausgesetzt sind. Es lässt sich dadurch eine Kühlung durch die sowieso vorhandene Lüftereinrichtung erreichen.

Aus dem gleichen Grund ist es günstig, wenn die Sekundärspuleneinrichtung und/oder eine sekundärseitige elektrische Schaltungseinrichtung so angeordnet sind, dass sie mindestens teilweise einem Luftstrom der Lüftereinrichtung ausgesetzt sind. Es lassen sich dadurch insbesondere Leistungsbauteile der entsprechenden Schaltungseinrichtung kühlen.

Die Lüftereinrichtung umfasst ein Lüfterrad, an welchem die Sekundärspuleneinrichtung angeordnet ist. Die Sekundärspuleneinrichtung lässt sich dabei so in das Lüfterrad integrieren, dass eine (Kühl-)Luftströmung der Lüftereinrichtung nicht wesentlich beeinflusst wird. Insbesondere lässt sich die Sekundärspuleneinrichtung so in das Lüfterrad integrieren, dass Bauteilabmessungen nicht oder nicht wesentlich vergrößert werden.

Insbesondere ist dabei das Lüfterrad drehfest mit dem Rotor verbunden. Der Rotor bildet gewissermaßen eine Welle des Lüfterrads.

Vorteilhafterweise ist die Lüfterhaube dabei drehfest zu dem Stator angeordnet.

Das Lüfterrad umfasst günstigerweise Strömungsleitelemente und die Sekundärspuleneinrichtung ist außerhalb der Strömungsleitelemente angeordnet. Dadurch wird die (Kühl-)Luftströmung der Lüftereinrichtung durch die Integration der Sekundärspuleneinrichtung das Lüfterrad nicht oder nicht wesentlich beeinflusst.

Das Lüfterrad weist eine zentrale Ausnehmung auf, in welcher die Sekundärspuleneinrichtung angeordnet ist, wobei insbesondere die zentrale Ausnehmung an einer Rotationsachse des Lüfterrads liegt. Dadurch lässt sich auf einfache Weise die Sekundärspuleneinrichtung in das Lüfterrad integrieren. Die Ausnehmung kann dabei auch dazu genutzt werden, um das Lüfterrad an dem Rotor zu fixieren. Durch die Anordnung in der zentralen Ausnehmung kann die Sekundärspuleneinrichtung nahe zu der Rotationsachse und insbesondere koaxial zu der Rotationsachse des Lüfterrads positioniert werden. Dadurch ist eine kontaktlose Energieübertragung von der Primärspuleneinrichtung zu der Sekundärspuleneinrichtung im Wesentlichen unabhängig von durch Rotation des Rotors auftretenden Fliehkräften.

Günstigerweise sind Strömungsleitelemente an dem Lüfterrad angeordnet, welche von einer Berandung der zentralen Ausnehmung zu einem Lüfterradrand verlaufen und bezogen auf eine Rotationsachse des Lüfterrads radial angeordnet sind. Die entsprechende Positionierung der Sekundärspuleneinrichtung in der zentralen Ausnehmung beeinflusst dann die Kühlluftströmung nicht wesentlich.

Es ist ferner günstig, wenn eine sekundärseitige elektrische Schaltungseinrichtung der Übertragungseinrichtung an dem Lüfterrad angeordnet ist. Dadurch ergibt sich ein einfacher kompakter Aufbau. Durch die Unterbringung der sekundärseitigen elektrischen Schaltungseinrichtung an und insbesondere in dem Lüfterrad lässt sich diese geschützt positionieren.

Bei einer Ausführungsform weist das Lüfterrad einen Innenraum auf, welcher zu einer Seite hin offen ist, die dem Rotor zugewandt ist, und in dem Innenraum ist die sekundärseitige elektrische Schaltungseinrichtung positioniert. An dem Lüfterrad ist dadurch eine Art von Tasche gebildet, welche die sekundärseitige elektrische Schaltungseinrichtung aufnimmt. Es ergibt sich dadurch ein kompakter Aufbau.

Insbesondere ist dabei der Innenraum durch eine bezogen auf eine Rotationsachse des Lüfterrads in Umfangsrichtung verlaufende Wandung seitlich begrenzt. Dadurch ist eine Art von Tasche ausgebildet. Die sekundärseitige elektrische Schaltungseinrichtung lässt sich seitlich abdecken und damit mechanisch schützen.

Es ist ferner günstig, wenn der Innenraum durch einen Boden mit ebener Einhüllendenfläche begrenzt ist, an welchem ein Träger für die sekundärseitige elektrische Schaltungseinrichtung positioniert ist. Es ergibt sich dadurch eine Anlagefläche und Befestigungsfläche für den Träger. Die elektrische Schaltungseinrichtung lässt sich dadurch auf einfache Weise an dem Lüfterrad positionieren. Insbesondere ergibt sich eine einfache Herstellbarkeit. Das Lüfterrad mit integrierter sekundärseitiger elektrischen Schaltungseinrichtung und integrierter Sekundärspuleneinrichtung lässt sich mit kompakten axialen Abmessungen ausbilden.

Bei einer Ausführungsform weist der Träger eine zentrale Öffnung auf. Beispielsweise hat der Träger eine Ringform oder U-Form. Durch die zentrale Öffnung kann ein Abschnitt des Rotors durchtauchen, über welchen das Lüfterrad an dem Rotor fixiert ist. Dieser Abschnitt kann insbesondere durch die zentrale Öffnung des Trägers hindurch in eine zentrale Ausnehmung des Lüfterrads eintauchen, um das Lüfterrad drehfest bezüglich des Rotors zu fixieren.

Günstig ist es, wenn die Lüfterhaube eine oder mehrere Lufteinlassöffnungen aufweist, welche an einer Wandung angeordnet sind, wobei die Wandung ein Lüfterrad abdeckt. Dadurch lässt sich ein definierter (Kühl-)Luftstrom durch die Lüftereinrichtung herstellen, um die elektrische Drehfeldmaschine zu kühlen. Dieser Luftstrom kann gegebenenfalls auch so beeinflusst werden, dass die Sekundärspuleneinrichtung und/oder die Primärspuleneinrichtung und/oder entsprechende Schaltungseinrichtungen kühlbar sind. Insbesondere ist die mindestens eine Lufteinlassöffnung an einer Vorderseite der Lüfterhaube angeordnet, welche dem Rotor abgewandt ist, und die Primärspuleneinrichtung ist an der Vorderseite angeordnet. Dadurch ergibt sich ein kompakter Aufbau. Die relative Anordnung der Primärspuleneinrichtung zu der Sekundärspuleneinrichtung ist definiert.

Für einen kompakten Aufbau der elektrischen Drehfeldmaschine ist es günstig, wenn eine primärseitige elektrische Schaltungseinrichtung der Übertragungseinrichtung an der Lüfterhaube angeordnet ist. Insbesondere ist es dadurch auch möglich gemacht, dass ein Luftstrom der Lüftereinrichtung die primärseitige elektrische Schaltungseinrichtung kühlen kann.

Bei einer Ausführungsform ist die primärseitige elektrische Schaltungseinrichtung an einer Vorderseite der Lüfterhaube angeordnet. Es ergibt sich dadurch ein kompakter Aufbau.

Es ist günstig, wenn eine Lüfterhaube und/oder ein Lüfterrad der Lüftereinrichtung mindestens teilweise aus einem elektrisch nicht leitenden Material hergestellt sind. Es werden dadurch Wirbelstromverluste vermieden. Die Lüftereinrichtung kann auch als Kühlkörper verwendet werden, wenn eine ausreichende thermische Leitfähigkeit vorliegt.

Ganz besonders vorteilhaft ist es, wenn ein Lüfterrad der Lüftereinrichtung bezogen auf eine Rotationsachse des Lüfterrads axial beabstandet zu dem Stator und axial beabstandet zu dem Abschnitt des Rotors, welcher von dem Stator umgeben ist, angeordnet ist. Die Lüftereinrichtung und insbesondere das Lüfterrad (und eine Lüfterhaube) sind dadurch nicht in einen Innenraum des Stators eingetaucht. Es ergibt sich dadurch ein konstruktiv einfacher Aufbau. Eine entsprechende elektrische Drehfeldmaschine lässt sich auf einfache Weise mit einer Lüfterausrichtung ausrüsten und auch nachrüsten, in welche die kontaktlose Übertragungseinrichtung integriert ist.

Ganz besonders vorteilhaft ist es, wenn die Übertragungseinrichtung eine elektrische Einrichtung zur konstanten Energiebereitstellung an die Fremderregungs-Wicklungseinrichtung aufweist, durch welche Variationen in einem axialen Abstand zwischen der Primärspuleneinrichtung und der Sekundärspuleneinrichtung in ihrer Auswirkung auf die Energiebereitstellung ausgleichbar sind.

Grundsätzlich liegt ein Luftspalt zwischen der Primärspuleneinrichtung und der Sekundärspuleneinrichtung vor, durch welchen hindurch kontaktlos elektrische Energie insbesondere induktiv übertragen wird. Da die Sekundärspuleneinrichtung mit dem Rotor verbunden ist und die Primärspuleneinrichtung drehfest zu dem Stator ist, bewirkt eine Änderung der axialen Position des Rotors eine Änderung im Luftspalt. Diese Änderung in dem Luftspalt wiederum bewirkt eine Änderung der elektrischen Übertragung. Eine solche Variation in der elektrischen Übertragung ist nicht erwünscht. Grundsätzlich ist es möglich, durch mechanische Mittel eine solche Variation zu kompensieren, um einen konstanten Luftspalt zu erhalten. Erfindungsgemäß ist eine elektrische Einrichtung vorgesehen, welche solche Variationen kompensiert und insbesondere in einem Regelungsverfahren kompensiert. Dadurch ergibt sich ein konstruktiv einfacher mechanischer Aufbau der Drehfeldmaschine. Es müssen keine mechanischen Mittel (wie Schleifkontakte oder dergleichen) zur Einstellung der axialen Rotorposition vorgesehen werden.

Insbesondere umfasst die elektrische Einrichtung eine Blindkompensationseinrichtung und/oder eine Ansteuerungseinrichtung für eine axiale Positionseinstellung des Rotors.

Es lässt sich dadurch beispielsweise in einem Regelungsverfahren ein konstanter Luftspalt zwischen der Primärspuleneinrichtung und der Sekundärspuleneinrichtung einstellen.

Günstig ist es, wenn die Übertragungseinrichtung eine Flussleiteinrichtung aufweist, um eine effektive induktive kontaktlose Übertragung von elektrischer Energie zu ermöglichen.

Bei einer Ausführungsform umfasst die Flussleiteinrichtung mindestens einen Ferritkern oder ist durch mindestens einen Ferritkern gebildet.

Der Ferritkern ist beispielsweise als Topfkern ausgeführt.

Beispielsweise sitzt mindestens eine Spulenwicklung der Primärspuleneinrichtung an einem ersten Flussleitabschnitt und mindestens eine Spulenwicklung der Sekundärspuleneinrichtung sitzt an einem zweiten Flussleitabschnitt, wobei insbesondere die Primärspuleneinrichtung mit dem ersten Flussleitabschnitt und die Sekundärspuleneinrichtung mit dem zweiten Flussleitabschnitt gleich ausgebildet sind.

Es ergibt sich dadurch ein einfacher kompakter Aufbau der Übertragungseinrichtung mit effektiver induktiver elektrischer Energieübertragung.

Günstig ist es, wenn eine Windungsachse der Primärspuleneinrichtung und/oder eine Windungsachse der Sekundärspuleneinrichtung koaxial zu einer Rotationsachse des Rotors liegen oder in einem Abstand höchstens eines halben Durchmessers der Primärspuleneinrichtung oder Sekundärspuleneinrichtung zu der Rotationsachse des Rotors liegen. Dadurch ist die elektrische Energieübertragung durch die Übertragungseinrichtung im Wesentlichen unabhängig von Fliehkräften aufgrund der Rotation des Rotors.

Insbesondere ist die Rotationsachse des Rotors koaxial zu einer Rotationsachse des Lüfterrads. Es ergibt sich dadurch ein einfacher kompakter Aufbau der elektrischen Drehfeldmaschine.

Die nachfolgende Beschreibung bevorzugter Ausführungsformen dient im Zusammenhang mit den Zeichnungen der näheren Erläuterung der Erfindung. Es zeigen:
- Figur 1: eine schematische Darstellung eines Ausführungsbeispiels einer erfindungsgemäßen Drehfeldmaschine;
- Figur 2: eine schematische Darstellung der Drehfeldmaschine gemäß Figur 1 bezüglich ihrer elektrischen Komponenten;
- Figur 3: eine Explosionsdarstellung eines Ausführungsbeispiels einer Lüftereinrichtung und einer Übertragungseinrichtung für die Drehfeldmaschine gemäß Figur 1;
- Figur 4: eine Seitenansicht der Lüftereinrichtung der Übertragungseinrichtung gemäß Figur 3 (in Explosionsdarstellung); und
- Figur 5: eine Teil-Schnittansicht eines Ausführungsbeispiels einer Übertragungseinrichtung.

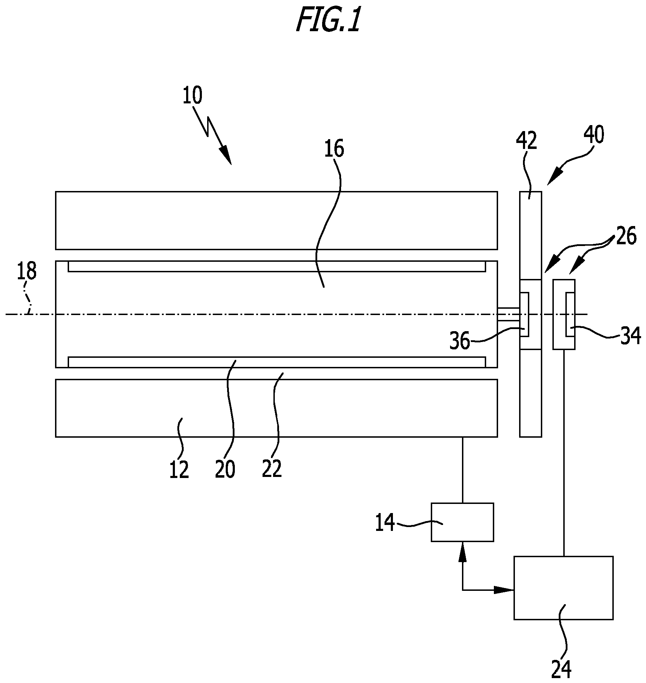

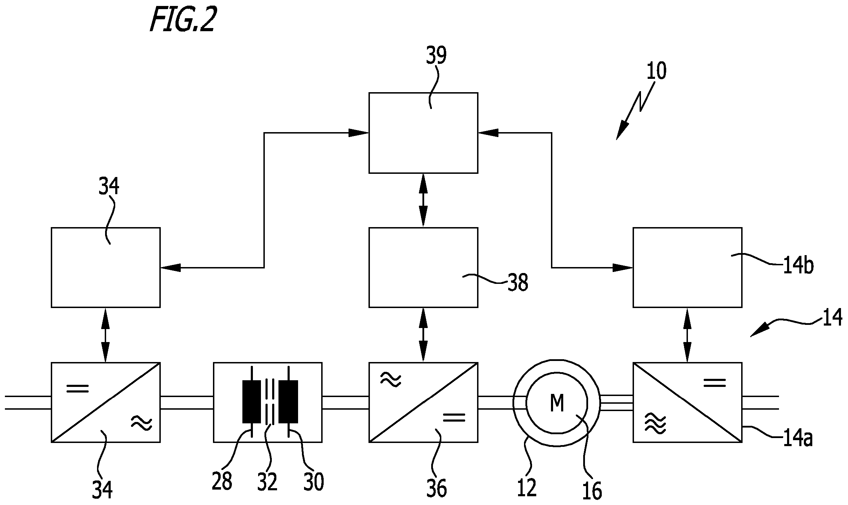

Ein Ausführungsbeispiel einer elektrischen Drehfeldmaschine, welche in Figur 1 schematisch gezeigt und mit 10 bezeichnet ist, umfasst einen Stator 12 mit Statorwicklungen. Dem Stator 12 ist eine Ansteuerungseinrichtung 14 zugeordnet, um Wicklungen des Stators 12 mit elektrischem Strom zu beaufschlagen. Die Ansteuerungseinrichtung 14 umfasst eine Stator-Schaltungseinrichtung 14a, welche insbesondere einen DC-AC-Wandler aufweist, und eine Steuereinheit 14b (Figur 2).

Die elektrische Drehfeldmaschine 10 umfasst ferner einen Rotor 16. Der Rotor ist um eine Rotationsachse 18 rotierbar. Der Rotor 16 ist fremderregt. Er weist eine Fremderregungs-Wicklungseinrichtung 20 auf.

Der Rotor 16 ist geschlossen von dem Stator 12 umgeben; der Stator 12 umgibt einen Innenraum 22, in welchem der Rotor 16 positioniert ist.

Die Fremderregungs-Wicklungseinrichtung 20 des Rotors 16 ist über eine Ansteuerungseinrichtung 24 angesteuert. Elektrische Energie wird von der Ansteuerungseinrichtung 24 über eine Übertragungseinrichtung 26 kontaktlos (mechanisch berührungslos) zu der Fremderregungs-Wicklungseinrichtung 20 übertragen. Die elektrische Drehfeldmaschine 10 weist keine Schleifkontakte oder dergleichen auf, um die Fremderregungs-Wicklungseinrichtung 20 mit elektrischer Energie zu versorgen.

Die Übertragungseinrichtung 26 weist eine Primärspuleneinrichtung 28 und eine Sekundärspuleneinrichtung 30 auf (Figur 2). Die Primärspuleneinrichtung 28 ist drehfest zu dem Stator 12 angeordnet. Die Primärspuleneinrichtung 28 ist eine statorseitige Spuleneinrichtung. Die Primärspuleneinrichtung 28 umfasst eine oder mehrere Spulen.

Die Sekundärspuleneinrichtung 30 ist drehfest mit dem Rotor 16 verbunden. Sie ist eine rotorseitige Spuleneinrichtung und umfasst eine oder mehrere Spulen.

Zwischen der Primärspuleneinrichtung 28 und der Sekundärspuleneinrichtung 30 ist ein Luftspalt 32 gebildet. Die Sekundärspuleneinrichtung 30 ist über den Luftspalt 32 von der Primärspuleneinrichtung 28 beabstandet. Durch eine Rotation des Rotors 16 rotiert die Sekundärspuleneinrichtung 30 relativ zu der Primärspuleneinrichtung 28 um die Rotationsachse 18. Durch den Luftspalt 32 hindurch wird elektrische Energie von der Primärspuleneinrichtung 28 zu der Sekundärspuleneinrichtung 30 und damit zur elektrischen Energieversorgung der Fremderregungs-Wicklungseinrichtung 20 übertragen.

Der Primärspuleneinrichtung 28 ist eine primärseitige elektrische Schaltungseinrichtung 34 zugeordnet. Die primärseitige elektrische Schaltungseinrichtung 34 ist drehfest zu dem Stator 12. Die primärseitige elektrische Schaltungseinrichtung 34 sorgt für eine entsprechende Ansteuerung der Primärspuleneinrichtung 28. Die primärseitige elektrische Schaltungseinrichtung 34 umfasst insbesondere einen DC-AC-Wandler.

Der Sekundärspuleneinrichtung 30 ist eine sekundärseitige elektrische Schaltungseinrichtung 36 zugeordnet. Die sekundärseitige elektrische Schaltungseinrichtung 36 ist drehfest mit dem Rotor 16 verbunden.

Die sekundärseitige elektrische Schaltungseinrichtung 36 umfasst insbesondere einen AC-DC-Wandler, um die Fremderregungs-Wicklungseinrichtung 20 mit Gleichstrom versorgen zu können.

Bei einem Ausführungsbeispiel umfasst die sekundärseitige elektrische Schaltungseinrichtung 36 auch eine elektrische Einrichtung 38, um Variationen in der axialen Höhe des Luftspalts 32 bezüglich der Energieübertragung kompensieren zu können. Solche Variationen werden durch Variationen in der axialen Position des Rotors 16 verursacht. Dies wird untenstehend noch näher beschrieben.

Es kann eine übergeordnete Steuer- und/oder Regelungseinrichtung 39 vorgesehen sein.

Die elektrische Drehfeldmaschine 10 weist eine Lüftereinrichtung 40 (Figuren 1, 3, 4) auf. Über die Lüftereinrichtung 40 ist die elektrische Drehfeldmaschine 10 luftkühlbar.

Die Lüftereinrichtung 40 umfasst ein Lüfterrad 42. Das Lüfterrad 42 ist drehfest mit dem Rotor 16 verbunden und um eine Rotationsachse rotierbar, welche mit der Rotationsachse 18 zusammenfällt. Der Rotor 16 bildet eine Welle zur Rotation des Lüfterrads 42.

Das Lüfterrad 42 ist beabstandet zu dem Stator 12 und dem Rotor 16 (bezogen auf einen Abschnitt des Rotors 16, welcher in dem Innenraum 22 positioniert ist), angeordnet. Das Lüfterrad 42 ist nicht von dem Stator 12 umgeben.

Die Lüftereinrichtung 40 umfasst ferner eine Lüfterhaube 44. Die Lüfterhaube 44 dient zur Abdeckung des Lüfterrads 42. Sie dient auch zur Erzeugung von definierten (Kühl-)Luftströmen; die Lüfterhaube 44 erzeugt axiale Komponenten in der Strömung.

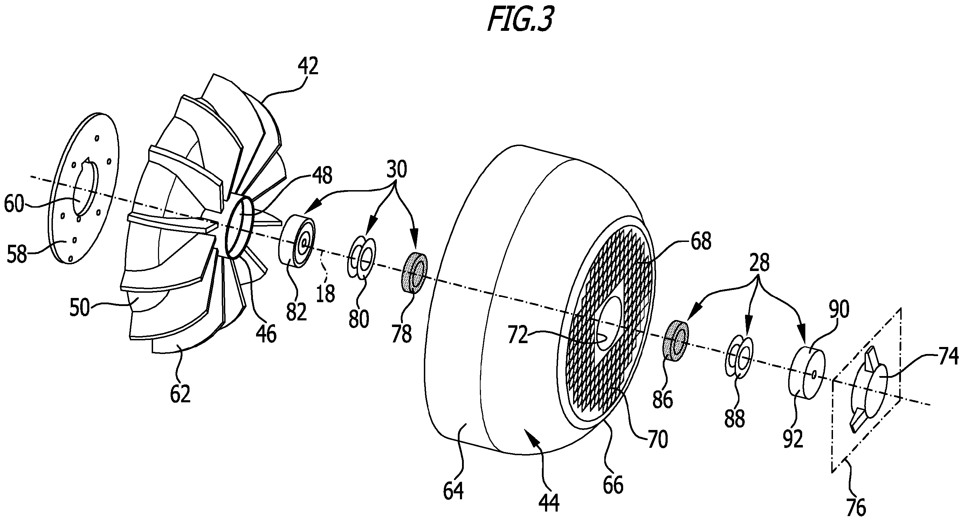

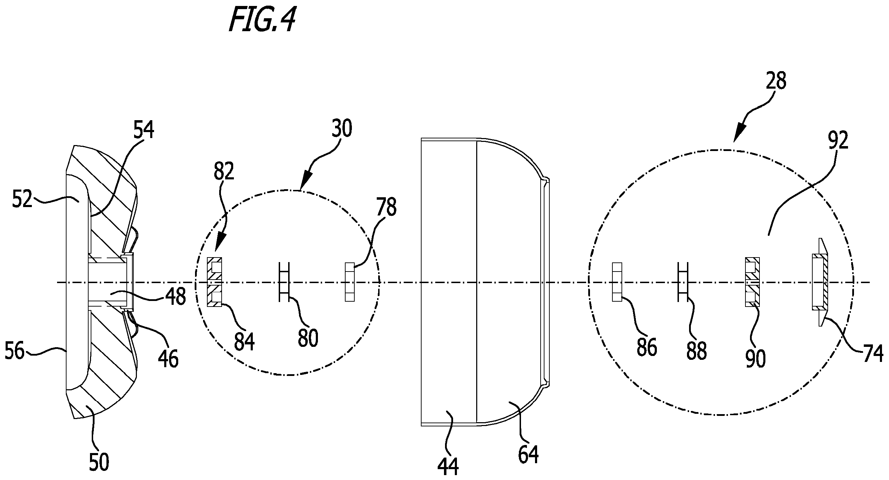

Bei einem Ausführungsbeispiel (Figuren 3, 4) umfasst das Lüfterrad 42 eine zentrale ringförmige Berandung 46, welche eine Ausnehmung 48 umgibt. Die Ausnehmung und die Berandung 46 sind koaxial zu der Rotationsachse (entsprechend der Rotationsachse 18 des Rotors 16) des Lüfterrads 42. Diese Rotationsachse durchstößt die Ausnehmung 48; die Ausnehmung 48 und die Berandung 46 sind insbesondere rotationssymmetrisch zu dieser Rotationsachse gebildet. Die Berandung 46 ist an einer Wandung 50 gebildet. Die Wandung 50 umgibt einen Innenraum 52 (Figur 4). Der Innenraum 52 ist seitlich durch die Wandung 50 begrenzt. Er ist ferner durch einen Boden 54 begrenzt, wobei die Ausnehmung 48 bis zu dem Boden 54 verläuft. Der Innenraum 52 hat dem Boden 54 gegenüberliegend eine offene Seite 56, welche dem Rotor 16 zugewandt ist.

An dem Boden 54 ist der Innenraum 52 eben ausgebildet oder zumindest hat der Boden 54 eine ebene Einhüllendenfläche.

Die sekundärseitige elektrische Schaltungseinrichtung 36 ist an einem Träger 58 angeordnet (Figur 3), welcher in dem Innenraum 52 positioniert ist. Der Träger 58 mit der sekundärseitigen elektrischen Schaltungseinrichtung 36 ist dabei so ausgebildet, dass die Wandung 50 in einer Umfangsrichtung bezogen auf die Rotationsachse 18 abgedeckt ist.

Die sekundärseitige Schaltungseinrichtung 36 ist insbesondere gekapselt. Beispielsweise ist der Innenraum 52 vergossen und/oder durch einen Deckel verschlossen.

Bei einem Ausführungsbeispiel weist der Träger 58 eine zentrale Öffnung 60 auf. Die Rotationsachse 18 liegt in dieser zentralen Öffnung 60. Der Träger 58 hat beispielsweise die Form einer Ringscheibe. Die zentrale Öffnung 60 liegt fluchtend mit der Ausnehmung 48. Beispielsweise lässt sich dadurch das Lüfterrad 42 auf einen entsprechenden Wellenstummel des Rotors 16 aufsetzen, wobei dieser Wellenstummel teilweise in die Ausnehmung 48 eingetaucht ist und dabei durch die zentrale Öffnung 60 des Trägers 58 durchgetaucht ist.

Das Lüfterrad 42 weist Strömungsleitelemente 62 auf. Die Strömungsleitelemente 62 sind bezogen auf die Rotationsachse 18 radial ausgerichtet und laufen von der Berandung 46 bis zu einem Lüfterradrand.

Das Lüfterrad 42 ist aus einem elektrisch nicht leitenden Material und beispielsweise Kunststoffmaterial hergestellt.

Die Sekundärspuleneinrichtung 30 ist, wie untenstehend noch näher erläutert wird, in der Ausnehmung 48 positioniert.

Die Lüfterhaube 44 weist eine Wandung 64 auf, welche das Lüfterrad 42 abdeckt.

Die Lüfterhaube 44 ist beispielsweise domförmig ausgebildet.

Die Wandung 64 hat eine Vorderseite 66. An der Vorderseite 66 sind Lufteinlassöffnungen 68 angeordnet. Beispielsweise ist die Wandung 64 an der Vorderseite 66 offen und an diesem offenen Bereich ist ein Gitter 70 angeordnet, an welchem die Lufteinlassöffnungen gebildet sind. Die Vorderseite 66 ist dabei zu dem Rotor 16 abgewandt.

Die Primärspuleneinrichtung 28 ist an der Lüfterhaube 44 angeordnet.

Bei einem Ausführungsbeispiel ist das Gitter 70 in einem zentralen Bereich mit einer zentralen Öffnung 72 versehen. An dieser zentralen Öffnung sitzt die Primärspuleneinrichtung 28 mittels einer Aufnahme 74, welche die Primärspuleneinrichtung 28 an der Vorderseite 66 der Lüfterhaube 44 hält.

Bei einem Ausführungsbeispiel sitzt ein Träger 76 der primärseitigen elektrischen Schaltungseinrichtung 34 ebenfalls an der Lüfterhaube 44. Er ist insbesondere an der Vorderseite 66 positioniert.

Es kann auch vorgesehen sein, dass die primärseitige elektrische Schaltungseinrichtung 34 beabstandet zu der Lüfterhaube 44 positioniert ist.

Die Lüfterhaube 44 kann bei einer Ausführungsform aus einem elektrisch nicht leitenden Material und beispielsweise aus einem Kunststoffmaterial hergestellt sein.

Die Sekundärspuleneinrichtung 30 umfasst mindestens eine Spulenwicklung 78, welche über einen Spulenhalter 80 (bobbin) an einer Flussleiteinrichtung 82 sitzt. Die Flussleiteinrichtung 82 ist beispielsweise durch einen Ferritkern gebildet. Beispielsweise ist die Flussleiteinrichtung 82 als Topfkern 84 ausgebildet. Die Kombination aus Topfkern 84, Spulenhalter 80 und Spulenwicklung 78 sitzt in der Ausnehmung 48 und ist damit in das Lüfterrad 42 integriert.

Die Sekundärspuleneinrichtung 30 sitzt außerhalb der Strömungsleitelemente 82. Sie ist so positioniert, dass die Kühlfunktion des Lüfterrads 42 nicht negativ beeinflusst wird.

Insbesondere sind die Sekundärspuleneinrichtung 30 und/oder die sekundärseitige elektrische Schaltungseinrichtung 36 so positioniert, dass sie mindestens teilweise einem Luftstrom (Kühlstrom) des Lüfterrads 42 ausgesetzt ist, so dass auch eine Kühlung der Sekundärspuleneinrichtung 30 und/oder der sekundärseitigen Schaltungseinrichtung 36 erfolgen kann.

Die Primärspuleneinrichtung 28 ist bei einem Ausführungsbeispiel grundsätzlich gleich ausgebildet wie die Sekundärspuleneinrichtung 30 und spiegelsymmetrisch zu der Sekundärspuleneinrichtung 30 positioniert. Sie umfasst (mindestens) eine Spulenwicklung 86, welche an einem Spulenhalter 88 an einer Flussleiteinrichtung 90 sitzt. Die Flussleiteinrichtung 90 ist insbesondere über einen Ferritkern gebildet. Die Flussleiteinrichtung hat beispielsweise die Form eines Topfkerns 92. Diese Kombination aus Spulenwicklung 86, Spulenhalter 88 und Flussleiteinrichtung 90 sitzt an der Lüfterhaube 44 und dabei insbesondere an der Vorderseite 66 der Lüfterhaube 44.

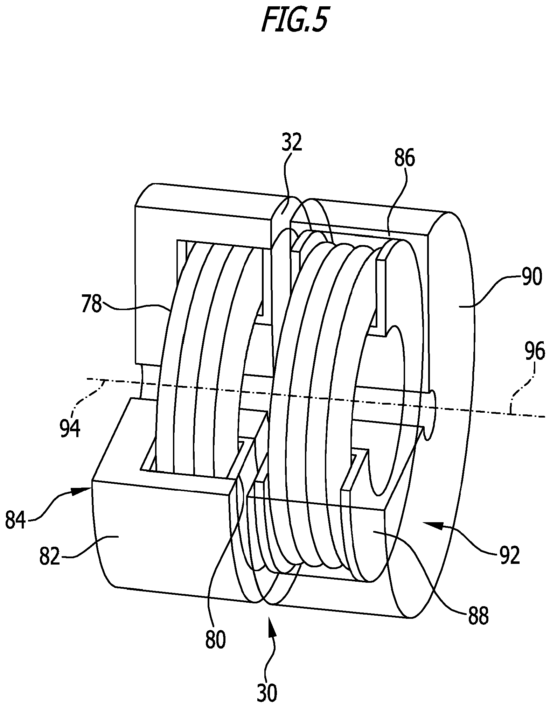

In Figur 5 ist die entsprechende Primärspuleneinrichtung 28 und die entsprechende Sekundärspuleneinrichtung 30 in ihrer Anordnung in zusammengebautem Zustand an der elektrischen Drehfeldmaschine 10 schematisch gezeigt. Zwischen diesen liegt der Luftspalt 32.

Grundsätzlich können beim Betrieb der elektrischen Drehfeldmaschinen Variationen in der axialen Position des Rotors 16 zu dem Stator 12 auftreten. Dadurch kann die axiale Höhe des Luftspalts 32 variieren. Dies bedeutet eine Variation in der elektromagnetischen Kopplung der Sekundärspuleneinrichtung 30 an die Primärspuleneinrichtung 28. Die elektrische Einrichtung 38, welche insbesondere auf dem Träger 58 angeordnet ist, sorgt für eine entsprechende Kompensation der Energiezuführung zu der Fremderregungs-Wicklungseinrichtung 20 bei Variation der axialen Höhe des Luftspalts 32. Dies erfolgt insbesondere über ein Regelungsverfahren, durch welches die Energiezuführung zu der Fremderregungs-Wicklungseinrichtung 20 weitgehend unabhängig von Luftspaltvariationen eingeregelt wird.

Es ist dabei vorgesehen, dass die elektrische Einrichtung 38 über eine Blindleistungskompensation die Energiezuführung zu der Fremderregungs-Wicklungseinrichtung 20 regelt beziehungsweise über eine elektrische Ansteuerung regelt.

Vorzugsweise ist die Primärspuleneinrichtung 28 und gegebenenfalls auch die primärseitige elektrische Schaltungseinrichtung 34 so an der Lüfterhaube 44 angeordnet, dass sie mindestens teilweise einem Luftstrom der Lüftereinrichtung 40 ausgesetzt sind und dadurch gekühlt werden.

Die erfindungsgemäße elektrische Drehfeldmaschine funktioniert wie folgt:
Die elektrische Drehfeldmaschine ist rotorseitig fremderregt. Sie ist beispielsweise als fremderregte Synchronmaschine, fremderregter Generator, fremderregte Lichtmaschine oder doppeltgespeiste Asynchronmaschine ausgebildet. Die Wicklungseinrichtung des Stators 12 wird mit elektrischem Strom beaufschlagt. Ferner wird die Fremderregungs-Wicklungseinrichtung 20 mit elektrischem Strom beaufschlagt. Zur Fremderregung der Fremderregungs-Wicklungseinrichtung 20 des Rotors 16 wird elektrische Energie kontaktlos über die Übertragungseinrichtung 26 übertragen. Die Sekundärspuleneinrichtung 30 ist induktiv an die Primärspuleneinrichtung 28 gekoppelt.

Um eine effektive Kopplung zu erhalten, ist es insbesondere vorgesehen, dass die entsprechenden elektronischen Schaltungen bei relativ hohen Frequenzen mit Gegentaktflusswandlern betrieben werden. Es werden dabei insbesondere weichschaltende Resonanzkonverter verwendet, welche im stromfreien oder spannungsfreien Zustand geschaltet werden können. Das Umschwingen von Lastströmen wird durch Kapazitäten bewirkt, welche zur Blindleistungskompensation eingesetzt werden und zusammen mit Streuinduktivitäten von Spulen bei nicht optimaler Kopplung gekoppelte Schwingkreise ausbilden.

Die übertragene Leistung hängt bei gegebener Eingangsspannung und gegebener Ausgangsspannung von der Resonanzfrequenz, von Streuinduktivitäten und Blindleistungskompensation sowie von der Frequenz einer Treiberschaltung ab. Insbesondere wird das System im Bereich der Resonanzfrequenz betrieben. Beispielsweise wird die primärseitige elektrische Schaltungseinrichtung 34 und die sekundärseitige elektrische Schaltungseinrichtung 36 als Gegentaktflusswandler realisiert und betrieben. Beispielsweise kann eine Push-Pull-Topologie mit Mittelpunktanzapfung als Halbbrücke oder Vollbrücke verwendet werden.

Das Lüfterrad 42 weist über den Innenraum 52 eine Tasche auf, in welcher die sekundärseitige elektrische Schaltungsanordnung 36 positioniert ist. In der Ausnehmung 48 ist die Sekundärspuleinrichtung 30 positioniert. Das Lüfterrad 42 liegt dabei außerhalb des Stators 12 und insbesondere außerhalb des Innenraums 22. Eine entsprechende elektrische Drehfeldmaschine 10 lässt sich nachrüsten, indem ein entsprechendes Lüfterrad 42 mit zugeordneter Lüfterhaube 44 verwendet wird.

Die Primärspuleneinrichtung 28 und die Sekundärspuleneinrichtung 30 sind in das Lüfterrad 42 und die Lüfterhaube 44 der Lüftereinrichtung 40 integriert. Diese Integration ist derart, dass eine Kühlluftströmung der Lüftereinrichtung 40 nicht wesentlich beeinflusst wird.

Ein Teil des Luftstroms lässt sich auch dazu nutzen, um die Primärspuleneinrichtung 28 und/oder die Sekundärspuleneinrichtung 30 gegebenenfalls auch die primärseitige elektrische Schaltungsanordnung 34 und/oder die sekundärseitige elektrische Schaltungsanordnung 36 zu kühlen.

Eine Bauhöhe der Lüftereinrichtung 40 und insbesondere des Lüfterrads 42 muss durch die Anordnung der Sekundärspuleneinrichtung 30 und der sekundärseitigen elektrischen Schaltungsanordnung 36 nicht erhöht werden, so dass eine Nachrüstbarkeit möglich ist.

Die mechanische Ausbildung der elektrischen Drehfeldmaschine 10 lässt sich auf einfache Weise gestalten. Durch die elektrische Einrichtung 38 muss keine mechanische Kompensionseinrichtung vorgesehen werden.

Durch die Ausbildung der Lüftereinrichtung 40 mit dem Lüfterrad 42 und der Lüfterhaube 44 aus einem elektrisch nicht leitenden Material werden Wirbelstromverluste an der Lüftereinrichtung 40 minimiert.

Es wird eine selbstkühlende elektrische Drehfeldmaschine 10 bereitgestellt, bei der die Übertragungseinrichtung 26 in die Lüftereinrichtung 40 integriert ist. Diese Integration wird durch einen verhältnismäßig geringen konstruktiven Aufwand erreicht. Die Primärspuleneinrichtung 28 und/oder die Sekundärspuleneinrichtung 30 wird beispielsweise über einen einzelnen Strang, eine mehrsträngige parallele Verschaltung oder als verdrillter Litzendraht verwendet. Es kann auch ein Lackdraht verwendet werden. Bei einer vorteilhaften Ausführungsform sind die Primärspuleneinrichtung 28 und die Sekundärspuleneinrichtung 30 gleich ausgebildet. Sie können aber auch unterschiedlich ausgestaltet sein.

Durch die Integration der Sekundärspuleneinrichtung 30 in das Lüfterrad 42 lässt sich auch eine von Fliehkräften unabhängige elektrische Übertragbarkeit erreichen. Eine Windungsachse 94 der Sekundärspuleneinrichtung 30 liegt dabei insbesondere koaxial zu der Rotationsachse 18.

Die Windungsachse 38 kann auch in einem kleinen Abstand zu der Rotationsachse 18 liegen, welcher insbesondere kleiner ist als ein Durchmesser der Sekundärspuleneinrichtung 30. Die Windungsachse 94 der Sekundärspuleneinrichtung 30 liegt koaxial zu einer Windungsachse 96 der Primärspuleneinrichtung 28.

### Bezugszeichenliste

- 10: Elektrische Drehfeldmaschine
- 12: Stator
- 14: Ansteuerungseinrichtung
- 14a: Stator-Schaltungseinrichtung
- 14b: Steuereinheit
- 16: Rotor
- 18: Rotationsachse
- 20: Fremderregungs-Wicklungseinrichtung
- 22: Innenraum
- 24: Ansteuerungseinrichtung
- 26: Übertragungseinrichtung
- 28: Primärspuleneinrichtung
- 30: Sekundärspuleneinrichtung
- 32: Luftspalt
- 34: Primärseitige elektrische Schaltungseinrichtung
- 36: Sekundärseitige elektrische Schaltungseinrichtung
- 38: Elektrische Einrichtung
- 39: Steuer- und/oder Regelungseinrichtung
- 40: Lüftereinrichtung
- 42: Lüfterrad
- 44: Lüfterhaube
- 46: Berandung
- 48: Ausnehmung
- 50: Wandung
- 52: Innenraum
- 54: Boden
- 56: Offene Seite
- 58: Träger
- 60: Zentrale Öffnung
- 62: Strömungsleitelement
- 64: Wandung
- 66: Vorderseite
- 68: Lufteinlassöffnung
- 70: Gitter
- 72: Öffnung
- 74: Aufnahme
- 76: Träger
- 78: Spulenwicklung
- 80: Spulenhalter
- 82: Flussleiteinrichtung
- 84: Topfkern
- 86: Spulenwicklung
- 88: Spulenhalter
- 90: Flussleiteinrichtung
- 92: Topfkern
- 94: Windungsachse
- 96: Windungsachse

## Patentansprüche

1. Elektrische Drehfeldmaschine, umfassend einen Stator (12), einen Rotor (16), welcher relativ zu dem Stator (12) rotierbar ist und an welchem eine Fremderregungs-Wicklungseinrichtung (20) angeordnet ist, eine Übertragungseinrichtung (26) zur berührungslosen Übertragung von elektrischer Energie zu der Fremderregungs-Wicklungseinrichtung (20), mit einer Primärspuleneinrichtung (28), welche drehfest zu dem Stator (12) angeordnet ist, und mit einer Sekundärspuleneinrichtung (30), welche drehfest zu dem Rotor angeordnet ist, und eine Lüftereinrichtung (40) zur Luftkühlung der Drehfeldmaschine, wobei die Übertragungseinrichtung (26) an der Lüftereinrichtung (40) angeordnet ist, **dadurch gekennzeichnet, dass** die Lüftereinrichtung (40) eine Lüfterhaube (44) umfasst, an welcher die Primärspuleneinrichtung (28) angeordnet ist, dass die Lüftereinrichtung (40) ein Lüfterrad (42) umfasst, an welchem die Sekundärspuleneinrichtung (30) angeordnet ist, und dass das Lüfterrad (42) eine zentrale Ausnehmung (48) aufweist, in welcher die Sekundärspuleneinrichtung (30) angeordnet ist.

2. Elektrische Drehfeldmaschine nach Anspruch 1, **dadurch gekennzeichnet, dass** eine primärseitige elektrische Schaltungseinrichtung (28) und/oder eine sekundärseitige elektrische Schaltungseinrichtung (36) an der Lüftereinrichtung (40) angeordnet sind.

3. Elektrische Drehfeldmaschine nach Anspruch 1 oder 2, **dadurch gekennzeichnet, dass** die Primärspuleneinrichtung (28) und/oder eine primärseitige elektrische Schaltungseinrichtung (34) so angeordnet sind, dass sie einem Luftstrom der Lüftereinrichtung (40) mindestens teilweise ausgesetzt sind.

4. Elektrische Drehfeldmaschine nach einem der vorangehenden Ansprüche, **dadurch gekennzeichnet, dass** die Sekundärspuleneinrichtung (30) und/oder eine sekundärseitige elektrische Schaltungseinrichtung (36) so angeordnet sind, dass sie mindestens teilweise einem Luftstrom der Lüftereinrichtung (40) ausgesetzt sind.

5. Elektrische Drehfeldmaschine nach einem der vorangehenden Ansprüche, **dadurch gekennzeichnet, dass** das Lüfterrad (42) drehfest mit dem Rotor (16) verbunden ist.

6. Elektrische Drehfeldmaschine nach einem der vorangehenden Ansprüche, **dadurch gekennzeichnet, dass** die Lüfterhaube (44) drehfest zu dem Stator (12) ist.

7. Elektrische Drehfeldmaschine nach Anspruch 6, **dadurch gekennzeichnet, dass** das Lüfterrad (42) Strömungsleitelemente (62) umfasst und dass die Sekundärspuleneinrichtung (30) außerhalb der Strömungsleitelemente (62) angeordnet ist.

8. Elektrische Drehfeldmaschine nach einem der vorangehenden Ansprüche, **dadurch gekennzeichnet, dass** die zentrale Ausnehmung (48) an einer Rotationsachse (18) des Lüfterrads (42) liegt, und insbesondere, dass Strömungsleitelemente (62) an dem Lüfterrad (42) angeordnet sind, welche von einer Berandung (46) der zentralen Ausnehmung (48) zu einem Lüfterradrand verlaufen und bezogen auf eine Rotationsachse (18) des Lüfterrads (42) radial angeordnet sind.

9. Elektrische Drehfeldmaschine nach einem der vorangehenden Ansprüche, **dadurch gekennzeichnet, dass** eine sekundärseitige elektrische Schaltungseinrichtung (36) der Übertragungseinrichtung (26) an dem Lüfterrad (42) angeordnet ist, und insbesondere, dass das Lüfterrad (42) einen Innenraum (52) aufweist, welcher zu einer Seite (56) hin offen ist, die dem Rotor (16) zugewandt ist, und dass in dem Innenraum (52) die sekundärseitige elektrische Schaltungseinrichtung (36) positioniert ist, und insbesondere, dass der Innenraum (52) durch eine bezogen auf eine Rotationsachse (18) des Lüfterrads (42) in Umfangsrichtung verlaufende Wandung (50) seitlich begrenzt ist, und insbesondere, dass der Innenraum (52) durch einen Boden (54) mit ebener Einhüllendenfläche begrenzt ist, an welchem ein Träger (58) für die sekundärseitige elektrische Schaltungseinrichtung (36) positioniert ist, und insbesondere, dass der Träger (58) eine zentrale Öffnung (60) aufweist.

10. Elektrische Drehfeldmaschine nach einem der vorangehenden Ansprüche, **dadurch gekennzeichnet, dass** die Lüfterhaube (44) eine oder mehrere Lufteinlassöffnungen (68) aufweist, welche an einer Wandung (64) angeordnet sind, wobei die Wandung (64) ein Lüfterrad (42) abdeckt, und insbesondere, dass die mindestens eine Lufteinlassöffnung (68) an einer Vorderseite (66) der Lüfterhaube (44) angeordnet ist, welche dem Rotor (16) abgewandt ist, und dass die Primärspuleneinrichtung (28) an der Vorderseite (66) angeordnet ist.

11. Elektrische Drehfeldmaschine nach einem der vorangehenden Ansprüche, **dadurch gekennzeichnet, dass** eine primärseitige elektrische Schaltungseinrichtung (34) der Übertragungseinrichtung (26) an der Lüfterhaube (44) angeordnet ist, und insbesondere, dass die primärseitige elektrische Schaltungseinrichtung (34) an einer Vorderseite (66) der Lüfterhaube (44) angeordnet ist.

12. Elektrische Drehfeldmaschine nach einem der vorangehenden Ansprüche, **dadurch gekennzeichnet, dass** die Lüfterhaube (44) und/oder das Lüfterrad (42) der Lüftereinrichtung (40) mindestens teilweise aus einem elektrisch nicht leitenden Material hergestellt sind.

13. Elektrische Drehfeldmaschine nach einem der vorangehenden Ansprüche, **dadurch gekennzeichnet, dass** das Lüfterrad (42) der Lüftereinrichtung (40) bezogen auf eine Rotationsachse (18) des Lüfterrads (42) axial beabstandet zu dem Stator (12) und axial beabstandet zu einem Abschnitt des Rotors (16), welcher von dem Stator (12) umgeben ist, angeordnet ist.

14. Elektrische Drehfeldmaschine nach einem der vorangehenden Ansprüche, **dadurch gekennzeichnet, dass** die Übertragungseinrichtung (26) eine Flussleiteinrichtung (82, 90) aufweist, und insbesondere, dass die Flussleiteinrichtung (82, 90) mindestens einen Ferritkern umfasst oder durch mindestens einen Ferritkern gebildet ist, und insbesondere, dass mindestens eine Spulenwicklung (86) der Primärspuleneinrichtung (28) an einem ersten Flussleitabschnitt (92) sitzt und mindestens eine Spulenwicklung (78) der Sekundärspuleneinrichtung (30) an einem zweiten Flussleitabschnitt (84) sitzt, wobei insbesondere die Primärspuleneinrichtung (28) mit dem ersten Flussleitabschnitt (92) und die Sekundärspuleneinrichtung (30) mit dem zweiten Flussleitabschnitt (84) gleich ausgebildet sind.

15. Elektrische Drehfeldmaschine nach einem der vorangehenden Ansprüche, **dadurch gekennzeichnet, dass** eine Windungsachse (96) der Primärspuleneinrichtung (28) und eine Windungsachse (94) der Sekundärspuleneinrichtung (30) koaxial zu einer Rotationsachse (18) des Rotors (16) liegen oder in einem Abstand höchstens eines halben Durchmessers der Primärspuleneinrichtung (28) oder Sekundärspuleneinrichtung (30) zu der Rotationsachse (18) des Rotors (16) liegen und dass die Rotationsachse (18) des Rotors (16) koaxial zu einer Rotationsachse des Lüfterrads (42) ist.

## Claims

1. Electric rotating-field machine comprising a stator (12), a rotor (16) which is rotatable relative to the stator (12) and on which an external excitation winding apparatus (20) is arranged, a transmission apparatus (26) for contactless transmission of electrical energy to the external excitation winding apparatus (20), with a primary coil apparatus (28) which is arranged non-rotatably relative to the stator (12), and with a secondary coil apparatus (30) which is arranged non-rotatably relative to the rotor, and a fan apparatus (40) for air cooling the rotating-field machine, wherein the transmission apparatus (26) is arranged on the fan apparatus (40), **characterised in that** the fan apparatus (40) comprises a fan cowl (44) on which the primary coil apparatus (28) is arranged, **in that** the fan apparatus (40) comprises a fan wheel (42) on which the secondary coil apparatus (30) is arranged, and **in that** the fan wheel (42) has a central recess (48) in which the secondary coil apparatus (30) is arranged.

2. Electric rotating-field machine according to claim 1, **characterised in that** a primary-side electrical circuit apparatus (28) and/or a secondary-side electrical circuit apparatus (36) are arranged on the fan apparatus (40).

3. Electric rotating-field machine according to claim 1 or 2, **characterised in that** the primary coil apparatus (28) and/or a primary-side electrical circuit apparatus (34) are arranged in such a way that they are at least partially exposed to an airflow from the fan apparatus (40).

4. Electric rotating-field machine according to one of the preceding claims, **characterised in that** the secondary coil apparatus (30) and/or a secondary-side electrical circuit apparatus (36) are arranged in such a way that they are at least partially exposed to an airflow from the fan apparatus (40).

5. Electric rotating-field machine according to one of the preceding claims, **characterised in that** the fan wheel (42) is connected to the rotor (16) for conjoint rotation therewith.

6. Electric rotating-field machine according to one of the preceding claims, **characterised in that** the fan cowl (44) is non-rotatably connected to the stator (12).

7. Electric rotating-field machine according to claim 6, **characterised in that** the fan wheel (42) comprises flow guiding elements (62) and **in that** the secondary coil apparatus (30) is arranged outside the flow guiding elements (62).

8. Electric rotating-field machine according to one of the preceding claims, **characterised in that** the central recess (48) is situated on a rotation axis (18) of the fan wheel (42), and, in particular, **in that** flow guiding elements (62) are arranged on the fan wheel (42), said flow guiding elements extending from a border (46) of the central recess (48) to a fan wheel edge and, in relation to a rotation axis (18) of the fan wheel (42), are radially arranged.

9. Electric rotating-field machine according to one of the preceding claims, **characterised in that** a secondary-side electrical circuit apparatus (36) of the transmission apparatus (26) is arranged on the fan wheel (42) and, in particular, **in that** the fan wheel (42) has an internal space (52) which is open to one side (56) which faces toward the rotor (16), and **in that** the secondary-side electrical circuit apparatus (36) is positioned in the internal space (52), and, in particular, **in that** the internal space (52) is laterally delimited by a wall (50) extending in a circumferential direction in relation to a rotation axis (18) of the fan wheel (42), and, in particular, **in that** the internal space (52) is delimited by a bottom (54) with a planar envelope surface on which a carrier (58) for the secondary-side electrical circuit apparatus (36) is positioned, and, in particular, **in that** the carrier (58) has a central opening (60).

10. Electric rotating-field machine according to one of the preceding claims, **characterised in that** the fan cowl (44) has one or more air inlet openings (68) which are arranged on a wall (64), wherein the wall (64) covers a fan wheel (42), and, in particular, **in that** the at least one air inlet opening (68) is arranged on a front side (66) of the fan cowl (44) which faces away from the rotor (16), and **in that** the primary coil apparatus (28) is arranged on the front side (66).

11. Electric rotating-field machine according to one of the preceding claims, **characterised in that** a primary-side electrical circuit apparatus (34) of the transmission apparatus (26) is arranged on the fan cowl (44) and, in particular, **in that** the primary-side electrical circuit apparatus (34) is arranged on a front side (66) of the fan cowl (44).

12. Electric rotating-field machine according to one of the preceding claims, **characterised in that** the fan cowl (44) and/or the fan wheel (42) of the fan apparatus (40) are at least partially made of an electrically nonconducting material.

13. Electric rotating-field machine according to one of the preceding claims, **characterised in that** the fan wheel (42) of the fan apparatus (40) is axially spaced from the stator (12) relative to a rotation axis (18) of the fan wheel (42) and is axially spaced from a portion of the rotor (16), which is surrounded by the stator (12).

14. Electric rotating-field machine according to one of the preceding claims, **characterised in that** the transmission apparatus (26) has a flux conducting apparatus (82, 90) and, in particular, **in that** the flux conducting apparatus (82, 90) comprises at least one ferrite core or is formed by at least one ferrite core and, in particular, **in that** at least one coil winding (86) of the primary coil apparatus (28) sits on a first flux conducting portion (92) and at least one coil winding (78) of the secondary coil apparatus (30) sits on a second flux conducting portion (84), wherein, in particular, the primary coil apparatus (28) with the first flux conducting portion (92) and the secondary coil apparatus (30) are constructed to be identical with the second flux conducting portion (84).

15. Electric rotating-field machine according to one of the preceding claims, **characterised in that** a winding axis (96) of the primary coil apparatus (28) and a winding axis (94) of the secondary coil apparatus (30) are arranged coaxially with a rotation axis (18) of the rotor (16) or lie at a spacing of not more than a half diameter of the primary coil apparatus (28) or the secondary coil apparatus (30) from the rotation axis (18) of the rotor (16) and **in that** the rotation axis (18) of the rotor (16) is coaxial with a rotation axis of the fan wheel (42).

## Revendications

1. Machine électrique à champ tournant, comprenant un stator (12), un rotor (16), lequel peut tourner par rapport au stator (12) et sur lequel est disposé un dispositif d'enroulement d'excitation extérieure (20), un dispositif de transmission (26) pour la transmission sans contact d'énergie électrique vers le dispositif d'enroulement d'excitation extérieure (20), avec un dispositif de bobine primaire (28), lequel est disposé de manière solidaire en rotation par rapport au stator (12), et avec un dispositif de bobine secondaire (30), lequel est disposé de manière solidaire en rotation par rapport au rotor, et un dispositif de ventilateur (40) pour le refroidissement d'air de la machine à champ tournant, dans laquelle le dispositif de transmission (26) est disposé sur le dispositif de ventilateur (40), **caractérisée en ce que** le dispositif de ventilateur (40) comprend un capot de ventilateur (44), sur lequel est disposé le dispositif de bobine primaire (28), que le dispositif de ventilateur (40) comprend une roue de ventilateur (42), sur laquelle est disposé le dispositif de bobine secondaire (30), et que la roue de ventilateur (42) présente un évidement central (48), dans lequel le dispositif de bobine secondaire (30) est disposé.

2. Machine électrique à champ tournant selon la revendication 1, **caractérisée en ce qu'**un dispositif de circuit électrique côté primaire (28) et/ou un dispositif de circuit électrique côté secondaire (36) sont disposés sur le dispositif de ventilateur (40).

3. Machine électrique à champ tournant selon la revendication 1 ou 2, **caractérisée en ce que** le dispositif de bobine primaire (28) et/ou un dispositif de circuit électrique côté primaire (34) sont disposés de telle sorte qu'ils sont soumis au moins en partie à un flux d'air du dispositif de ventilateur (40).

4. Machine électrique à champ tournant selon l'une quelconque des revendications précédentes, **caractérisée en ce que** le dispositif de bobine secondaire (30) et/ou un dispositif de circuit électrique côté secondaire (36) sont disposés de telle sorte qu'ils sont soumis au moins en partie à un flux d'air du dispositif de ventilateur (40).

5. Machine électrique à champ tournant selon l'une quelconque des revendications précédentes, **caractérisée en ce que** la roue de ventilateur (42) est reliée de manière solidaire en rotation au rotor (16).

6. Machine électrique à champ tournant selon l'une quelconque des revendications précédentes, **caractérisée en ce que** le capot de ventilateur (44) est solidaire en rotation par rapport au stator (12).

7. Machine électrique à champ tournant selon la revendication 6, **caractérisée en ce que** la roue de ventilateur (42) comprend des éléments de guidage d'écoulement (62), et que le dispositif de bobine secondaire (30) est disposé à l'extérieur des éléments de guidage d'écoulement (62).

8. Machine électrique à champ tournant selon l'une quelconque des revendications précédentes, **caractérisée en ce que** l'évidement central (48) se situe sur un axe de rotation (18) de la roue de ventilateur (42), et en particulier que des éléments de guidage d'écoulement (62) sont disposés sur la roue de ventilateur (42), lesquels s'étendent depuis un rebord (46) de l'évidement central (48) vers un bord de roue de ventilateur et sont disposés de manière radiale par rapport à un axe de rotation (18) de la roue de ventilateur (42).

9. Machine électrique à champ tournant selon l'une quelconque des revendications précédentes, **caractérisée en ce qu'**un dispositif de circuit électrique côté secondaire (36) du dispositif de transmission (26) est disposé sur la roue de ventilateur (42), et en particulier que la roue de ventilateur (42) présente un espace intérieur (52), lequel est ouvert en direction d'un côté (56) qui est orienté vers le rotor (16), et que le dispositif de circuit électrique côté secondaire (36) est positionné dans l'espace intérieur (52), et en particulier que l'espace intérieur (52) est délimité de manière latérale par une paroi (50) s'étendant dans la direction périphérique par rapport à un axe de rotation (18) de la roue de ventilateur (42), et en particulier que l'espace intérieur (52) est délimité par un fond (54) avec une surface d'extrémité d'enveloppement plane, sur lequel un support (58) pour le dispositif de circuit électrique côté secondaire (36) est positionné, et en particulier que le support (58) présente une ouverture centrale (60).

10. Machine électrique à champ tournant selon l'une quelconque des revendications précédentes, **caractérisée en ce que** le capot de ventilateur (44) présente une ou plusieurs ouvertures d'entrée d'air (68), lesquelles sont disposées sur une paroi (64), dans laquelle la paroi (64) recouvre une roue de ventilateur (42), et en particulier que l'au moins une ouverture d'entrée d'air (68) est disposée sur un côté avant (66) du capot de ventilateur (44), lequel est opposé au rotor (16), et que le dispositif de bobine primaire (28) est disposé sur le côté avant (66).

11. Machine électrique à champ tournant selon l'une quelconque des revendications précédentes, **caractérisée en ce qu'**un dispositif de circuit électrique côté primaire (34) du dispositif de transmission (26) est disposé sur le capot de ventilateur (44), et en particulier que le dispositif de circuit électrique côté primaire (34) est disposé sur un côté avant (66) du capot de ventilateur (44).

12. Machine électrique à champ tournant selon l'une quelconque des revendications précédentes, **caractérisée en ce que** le capot de ventilateur (44) et/ou la roue de ventilateur (42) du dispositif de ventilateur (40) sont fabriqués au moins en partie à partir d'un matériau non conducteur électriquement.

13. Machine électrique à champ tournant selon l'une quelconque des revendications précédentes, **caractérisée en ce que** la roue de ventilateur (42) du dispositif de ventilateur (40) est disposée par rapport à un axe de rotation (18) de la roue de ventilateur (42) de manière espacée axialement par rapport au stator (12) et de manière espacée axialement par rapport à une section du rotor (16) entourée par le stator (12).

14. Machine électrique à champ tournant selon l'une quelconque des revendications précédentes, **caractérisée en ce que** le dispositif de transmission (26) présente un dispositif de guidage de flux (82, 90), et en particulier que le dispositif de guidage de flux (82, 90) comprend au moins un noyau en ferrite ou est formé par au moins un noyau en ferrite, et en particulier qu'au moins un enroulement de bobine (86) du dispositif de bobine primaire (28) siège sur une première section de guidage de flux et au moins un enroulement de bobine (78) du dispositif de bobine secondaire (30) siège sur une deuxième section de guidage de flux (84), dans laquelle en particulier le dispositif de bobine primaire (28) avec la première section de guidage de flux (92) et le dispositif de bobine secondaire (30) avec la deuxième section de guidage de flux (84) sont réalisés de manière identique.

15. Machine électrique à champ tournant selon l'une quelconque des revendications précédentes, **caractérisée en ce qu'**un axe de spire (96) du dispositif de bobine primaire (28) et un axe de spire (94) du dispositif de bobine secondaire (30) se situent de manière coaxiale par rapport à un axe de rotation (18) du rotor (16) ou se situent à une distance maximale d'un demi-diamètre du dispositif de bobine primaire (28) ou du dispositif de bobine secondaire (30) par rapport à l'axe de rotation (18) du rotor (16), et que l'axe de rotation (18) du rotor (16) est coaxial par rapport à un axe de rotation de la roue de ventilateur (42).
